# EUROPEAN PATENT APPLICATION

(11) **EP 4 393 769 A1**
(43) Date of publication of application: **03.07.2024**
(21) Application number: 23214203.4
(22) Date of filing: 05.12.2023
(51) Int. Cl.: B60M 1/28, B61L 15/00

(54) **SYSTEM AND METHOD FOR DETERMINING A MAINTENANCE STATUS**

(30) Priority: 08.12.2022 SE 2251436
(71) Applicant: Railway Metrics and Dynamics Sweden AB, 11143 Stockholm (SE)
(72) Inventor: Lindqvist, Jan, 181 51 Lidingö (SE); Wrife, Kenneth, 111 43 Stockholm (SE)
(74) Representative: AWA Sweden AB

(57) **Abstract**

There is provided a system for determining a maintenance status of a pantograph and/or a contact wire. The system comprises at least one emitter arranged on the vehicle, configured to emit radio waves, at least one reflector arranged on the pantograph, configured to reflect radio waves emitted by the emitter, at least one detector arranged on the vehicle, configured to detect at least a portion of the reflected radio waves, and generate detector data. The system comprises a control unit configured to receive the detector data, calculate at least one distance based on the received detector data, calculate at least one acceleration of the pantograph based on the calculated at least one distance, and determine the maintenance status based on at least one of the calculated at least one distance and the calculated at least one acceleration, wherein the maintenance status indicates a level of wear on at least one of the pantograph and the contact wire.

## Description

### FIELD OF THE INVENTION

The present invention generally relates to a system and method for determining a maintenance status of a pantograph and/or a contact wire. In particular, the present invention relates to a system and method for determining a maintenance status of a pantograph and/or a contact wire using radar.

### BACKGROUND OF THE INVENTION

A pantograph is commonly used for collecting power through contact with an overhead contact wire. Pantographs may be mounted on, for example, trains, trams and electric buses. The pantograph is in contact with an overhead contact wire through a carbon rail. Graphite conducts electricity while working as a lubricant. As graphite is relatively brittle, pieces may break off during operation. Worn-down pantographs can seize the overhead wire and tear it down, causing long disruptions in, for example, train services. The contact wire being in electrical contact with the pantograph is also worn down with time. This might result in parts of the overhead power line, besides the contact wire to unwantedly come in contact with a passing pantograph, such as the clamps holding the contact wire from above. This might result in the pantograph to cling on to, or be damaged by, the parts of the overhead power line that is not meant to be in contact with the pantograph.

One solution for avoiding this problem is monitoring pantographs passing certain points of a railway system. These are normally based on a vision system which takes pictures of the pantographs and performs an analysis based on computer vision algorithms. Furthermore, there are systems which uses e.g. laser light to extract information on the pantograph. However, these systems may be too expensive and impractical, and/or have problems with stability and robustness in the measurement of the maintenance status due to dirt, debris or other objects which may interfere with the analysis of the maintenance status.

Another solution, also referred to as auto drop, is to have an automatic lowering function in the pantograph, where the pantograph is lowered when the rail in contact with the contact wire is damaged. Automatic lowering is commonly implemented via air tubes in the carbon rail in contact with the lifter, lifting the pantograph via air pressure. If the rail is damaged or run down, the air tubes may leak, and in response the pantograph is lowered.

However, this solution does not provide any way of monitoring the need for maintenance before the pantograph breaks. Therefore, a challenge in the present field is how to provide better maintenance monitoring for pantographs and the wire intended to be in electrical contact with the carbon rail.

### SUMMARY OF THE INVENTION

An object of the present invention is therefore to mitigate at least some of the drawbacks described above. To achieve this, a system and a method for determining a maintenance status for a pantograph arranged on a vehicle and/or a contact wire intended to be in electrical contact with the pantograph is provided.

According to a first aspect of the present invention, there is provided a system for determining a maintenance status of at least one of a pantograph arranged on a vehicle and a contact wire intended to be in electrical contact with the pantograph. The system comprises at least one emitter arranged on the vehicle, configured to emit radio waves, and at least one reflector arranged on the pantograph, configured to reflect radio waves emitted by the emitter. The system further comprises at least one detector arranged on the vehicle, configured to detect at least a portion of the reflected radio waves, reflected from the at least one reflector and generate detector data. The system further comprises a control unit configured to receive the detector data, calculate at least one distance between the at least one reflector and the at least one detector based on the received detector data, calculate at least one of a longitudinal, vertical and lateral acceleration of the pantograph based on the calculated at least one distance, and determine the maintenance status based on at least one of the calculated at least one distance and the calculated at least one acceleration, wherein the maintenance status indicates a level of wear on at least one of the pantograph and the contact wire.

According to a second aspect of the present invention, there is provided a method for determining a maintenance status for at least one of a pantograph arranged on a vehicle, and a contact wire intended to be in electrical contact with the pantograph. The method comprises emitting radio waves towards the pantograph. The method further comprises detecting at least a portion of the radio waves reflected from the pantograph and generating detector data. The method further comprises calculating at least one distance between the at least one reflector and the at least one detector based on the received detector data, calculating at least one of a longitudinal, vertical and lateral acceleration of the pantograph based on the calculated at least one distance, and determining a maintenance status for at least one of the pantograph and the contact wire based on at least one of the calculated at least one distance and the at least one calculated acceleration, and wherein the maintenance status indicates a level of wear on at least one of the pantograph and the contact wire.

Thus, the first and second aspect of the present invention are based on the common concept or idea of providing a more reliable and more accurate system and method for determining the status of a pantograph and/or a contact wire, so that it can be determined if the pantograph and/or contact wire needs maintenance. The common idea is to use an emitter of radio waves, and one or more reflectors, arranged on the pantograph, configured to reflect the radio waves, wherein the reflected radio waves are detected by a detector. Combined with a control unit configured to receive the detector data and calculate at least one distance between the reflector and the detector and based on that at least one distance calculate at least one of a longitudinal, vertical and lateral acceleration, a maintenance status may be determined based on at least one of the calculated at least one distance and at least one of the calculated accelerations. The maintenance status indicates a level of wear on the pantograph and/or the contact wire, and the maintenance status may be used for planning maintenance of the pantograph and/or the contact wire.

The present invention is advantageous in that it uses electromagnetic radiation in the radio-spectrum. Radio waves are beneficial to use because they can better penetrate e.g. dirt on the different components of the system, such as the detector and the reflector(s). Consequently, the use of radio waves provides less loss of information, e.g. spectral information, which may affect if a distance between the reflector and the detector and/or an acceleration of the pantograph can be determined and/or the accuracy of the determination of the distance and the acceleration. There may also be debris, or objects in general, which may obstruct, at least partially, the determination of an acceleration of the pantograph and a distance between the reflector and the detector.

This provides a system with higher fidelity and accuracy, usable in realistic scenarios where the presence of dirt, or other obstructions, is common, without losing as much information, due to e.g. attenuation, as other options, such as LIDAR or normal laser systems. Furthermore, by using radio waves, the system may be more robust and may be cheaper than options such as LIDAR and ultrasound, due to e.g. more robust and/or cheaper components.

It will be further appreciated that the system is arranged on the train, allowing the system to determine a maintenance status of the pantograph and/or the contact wire at any point in time, both when the train is moving, and when the train is parked. This may provide, at least to some extent, real-time information gathering on maintenance status of the pantograph and/or the contact wire. Furthermore, the maintenance status may be determined on the train by the control unit.

Pantographs commonly have a carbon rail for conducting current from the contact wire. As a pantograph is used, the carbon rail is in contact with the contact wire. This causes friction and the carbon rails to be run down. This causes portions of the carbon rails to become uneven. The uneven portions may cause the pantograph to move more than if the carbon rail was new and not uneven. With the present method and system, the pantograph's movement is monitored, i.e. the distance between a reflector and a detector and/or an acceleration of the pantograph. Based on the calculated distances between the at least one reflector and the at least one detector, as well as the calculated accelerations, it may be determined that the pantograph is in need of maintenance, and an indication of a level of wear on the pantograph may be determined. In this way, wear on the pantograph may be determined before the wear on the pantograph reaches a critical level. This allows for better estimating the maintenance need for the vehicle or the pantograph, i.e. the maintenance may be planned instead of being acute or the pantograph breaking and potentially damaging the contact wire.

In addition, the friction between the carbon rail and the contact wire will also affect the contact wire negatively. The friction will cause the contact wire to be worn down but with a much lower rate than that of the carbon rails.

This might lead to the device linking the dropper to the contact wire, such as a clamp or similar gripping device holding the contact wire from above, being exposed to the carbon rail. This will in turn risk causing unwanted damages to the carbon rail and in the long run risk the contact wire to be torn down.

Other, here not stated reasons for having a faulty contact wire might also be present that is determinable and giving rise to a characteristic acceleration in the pantograph.

By detecting a maintenance need before the pantograph breaks the service level of the vehicle may be increased and service disruptions due to faulty pantographs may be avoided. For example, it is common that faulty pantographs on trains tear down the contact wire. This may block a whole track, causing disruptions not only to the train on which the pantograph is arranged, but also to other trains scheduled on the same track. This may be very costly and inconvenient.

In a similar way, by determining the maintenance status of the contact wires, faulty contact wires may be identified before costly and inconvenient service disruptions occur.

Further, in comparison with previous maintenance detection systems based on image recognition, in the present disclosure the maintenance need may be monitored continuously or periodically as the system is arranged on the vehicle, and not on the ground as in the example of the cameras for image recognition. Wear on the pantograph and/or the contact wire may thereby be detected early.

Commonly, maintenance of pantographs is scheduled regularly. Since they are often located on top of vehicles, ocular inspection is inconvenient, and may be dangerous to the person performing the inspection. This may cause inspection to be skipped, and for pantographs to only be checked during their scheduled maintenance times. At those points in time, the pantograph maintenance may not be at an optimal point in time. For example, the pantograph may be used for six more months before maintenance is needed, or the pantograph has already been broken and is at risk for breaking the contact wire. With the system and method of the current disclosure, the maintenance may be scheduled more efficiently, as the maintenance status may be monitored over time.

With the term "pantograph" it is meant an electric current collector. Pantographs may be mounted on vehicles, such as trolleybuses, trams, electric locomotives or any other vehicle in need of electricity, to carry electrical power from overhead lines or electrical third rails to the electrical equipment of the vehicle.

By "contact wire" it is meant part of a current provider such as an overhead line intended to be in electrical contact with the pantograph.

By "maintenance status" it may be meant a level of wear on the pantograph and/or the contact wire, i.e. how much the pantograph and/or contact wire needs maintenance. For example, a low level of wear on the pantograph and/or the contact wire would mean a maintenance status indicating a low need for maintenance, whereas a high level of wear on the pantograph and/or the contact wire would mean a maintenance status indicating a high need of maintenance.

It has been realized that wear on a pantograph arranged on a vehicle affects the interaction between a contact wire and the pantograph. This interaction may cause the pantograph to accelerate or move in a specific acceleration pattern, for example, having higher accelerations than when new and not worn down. By monitoring the movement of the pantograph, acceleration changes or changes in an acceleration pattern may be detected. Based on such acceleration changes a maintenance status indicating the level of wear on the pantograph may be determined. For example, the maintenance status may indicate that maintenance should be scheduled within a certain time period, that there is a low wear on the pantograph and no action would be needed, or that the pantograph has a very high wear and is close to breaking, and should not be used and be repaired as soon as possible.

It has also been realized that wear on a contact wire in contact with a pantograph affects the interaction between the contact wire and the pantograph. A contact wire in need of maintenance might result in characteristic movement, such as accelerations induced in the pantograph that's distinguishable from accelerations caused by a pantograph in contact with an unaffected contact wire that's not in need of maintenance. For instance, the gripping device or clamping device holding the contact wire from above might be exposed, i.e risk striking the pantograph when the pantograph is passing, either due to mechanical failure in the clamp itself or due to wear down of the contact wire. By monitoring the movement of the pantograph, such acceleration changes or changes in an acceleration pattern may be detected. Based on such acceleration changes a maintenance status indicating the level of wear on the contact wire may be determined. For example, the maintenance status may indicate that maintenance should be scheduled within a certain time period, that there is a low wear on the contact wire and no action would be needed, or that the contact wire has a very high wear and is close to breaking, and should not be used and be repaired as soon as possible. To distinguish if a measured acceleration in the pantograph is caused by wear down of the pantograph or from acceleration caused by the contact wire being worn there could be analysis made on the measured acceleration and from, for example, orientation of acceleration, frequency of oscillation and/or other characteristic signal features the source causing the acceleration is identified. It is to be understood that the system of the present application may monitor the movement of the pantograph, by generating radar detector data which is used to calculate at least one distance between at least one reflector and at least one detector, and calculate at least one acceleration based on the calculated at least one distance.

The system according to the first aspect of the present invention comprises at least one emitter arranged on the vehicle, configured to emit radio waves, and at least one reflector arranged on the pantograph, configured to reflect radio waves emitted by the emitter. The emitter may be any device, component or unit which can generate electromagnetic radiation with a wavelength in the radio spectrum. It is to be understood that the emitter may be arranged on the pantograph. The emitter may be configured to emit radio waves that are coherent radar pulses. Using coherent radar pulses is advantageous because small phase shifts of the reflected radio waves are detectable. Furthermore, signal-to-noise ratio may be improved. For example, the doppler effect may be used to reduce the influence of fixed clutter. The reflector may be any device, component or unit which can reflect/redirect electromagnetic radiation, especially electromagnetic radiation in the radio-spectrum. The radio waves being emitted and reflected may have a frequency in the range of 3Hz - 3000GHz. The reflector may be a directing reflector configured to reflect the incoming radio waves back towards the direction from which it came. For example, the reflector may be configured and/or arranged to focus the radio waves towards the at least one detector. The reflector may be a mirror reflector which reflects radio waves like a mirror. The reflector may significantly increase the fidelity and strength of the reflected radio waves, which may provide a system where the detector data generated by the detector when a reflected radio wave is detected is stronger and/or more reliable. This may result in a system providing a more accurate and reliable maintenance status.

The system comprises at least one detector arranged on the vehicle, configured to detect at least a portion of the reflected radio waves, reflected from the at least one reflector and generate detector data. The detector may be any device, component or unit that can receive/detect electromagnetic radiation in the radio spectrum, e.g. radio wave echoes. It is to be understood that the system may comprise any number of emitters, reflectors and detectors. For example, the system may comprise one emitter emitting radio waves towards two reflectors, and one detector receiving reflected radio waves from the two reflectors. In another example, the system may comprise a first emitter arranged to emit radio waves towards a first reflector, and a first detector configured to detect reflected radio waves from the first reflector, and a second emitter configured to emit radio waves towards a second reflector, and a second detector configured to detect reflected radio waves from the second reflector. In another example, an emitter and a detector may form a single unit, such as a radio wave transceiver. It is also to be understood that the emitter, reflectors and detectors may be arranged on different sides of the pantograph. For example, a first emitter, reflector and detector may be arranged on a first side, and a second emitter, reflector and detector may be arranged on a second opposite side.

The system further comprises a control unit configured to receive the detector data and calculate at least one distance between the at least one reflector and the at least one detector based on the received detector data. The calculated at least one distance is then used to calculate at least one of a longitudinal, vertical and lateral acceleration of the pantograph based on the detector data, and determine the maintenance status based on at least one of the calculated at least one distance and the calculated at least one acceleration, wherein the maintenance status indicates a level of wear on at least one of the pantograph and the contact wire. It is to be understood that

In an embodiment the control unit is configured to determine the maintenance status based on both the calculated at least one distance and the at least one acceleration. In other words, at least one distance and at least one of the longitudinal, vertical and lateral acceleration of the pantograph are used in combination to determine the maintenance status. This is advantageous in that the system may determine the maintenance status more accurately and reliably.

The control unit is configured to receive at least part of the detector data from the detector. The control unit may be any device, component, unit, computer, processing unit with processing circuitry. The control unit may comprise a processor configured to perform data operations, e.g. a micro controller, MCU. The control unit may be arranged on the vehicle.

By the phrasing "arranged on the vehicle", it is here meant mounting, attaching, fixing and/or securing to the vehicle, for example on top of a wagon of the train, or even on the pantograph.

The maintenance status may be calculated using machine learning models. For example, the control unit may be configured to apply a machine learning model on the detector data as input, and then output the maintenance status. The determining/calculation of the maintenance status may comprise providing a metric representing the maintenance status in terms of wear and/or damage.

According to an embodiment of the present invention, the control unit is further configured to determine an acceleration pattern based on the calculated at least one acceleration of the pantograph, and wherein the control unit is configured to determine the maintenance status based on the acceleration pattern. The "acceleration pattern" may be interpreted as accelerations or movements over time for the pantograph, i.e. the acceleration pattern may comprise a temporal acceleration pattern. For example, a characteristic acceleration pattern may be connected to a specific maintenance status. The present embodiment is advantageous in that the determination of maintenance status may be improved, since a pattern in acceleration may provide more information and/or more accurate information in regard to maintenance status in comparison to just knowing acceleration values, resulting in a more accurate maintenance status. In the present embodiment, the pantograph's accelerations are monitored, and a movement pattern is detected in the accelerations. Based on the movement pattern having accelerations, e.g. above a predetermined level, it may be determined that the pantograph is in need of maintenance, and an indication of a level of wear on the pantograph may be determined. It is to be understood that the control unit may be configured to determine the maintenance status based on the calculated accelerations and/or the acceleration pattern. The determination of the maintenance status may be improved by basing it on both the acceleration values and knowledge of the pattern that the acceleration values form over time.

The control unit may be configured to determine an acceleration pattern based on two or three of the longitudinal, vertical and lateral accelerations of the pantograph. This is advantageous in that the maintenance status may be determined even more accurately, since knowing the acceleration patterns of accelerations in more than one dimension provide even more information on the pantograph and/or contact wire.

In an embodiment, the control unit may be configured to determine the maintenance status also based on the speed of the vehicle. This provides an improvement in the determination of the maintenance status since it may account/compensate for forces that depend on the speed of the train, e.g. the determined maintenance status may be more accurate.

In a further embodiment, the control unit may be configured to determine the maintenance status also based on the positioning of the pantograph. This provides an improvement in the determination of the maintenance status since it may account/compensate for errors related to the positioning of the pantograph. Thus, the determined maintenance status may be more accurate. In a further embodiment, the control unit may be configured to determine a maintenance status also based on the position of the contact wire. The system may comprise a wire sensor configured to generate contact wire position data, e.g. height data indicating a height of the contact wire over the vehicle /pantograph. The position of the contact wire may comprise the distance relative the pantograph. The control unit may be configured to receive contact wire data indicating a position of the contact wire. The position of the contact wire may comprise the height of at least a part of the contact wire over the vehicle. The present embodiment provides improved determination of the maintenance status, e.g. a more accurate maintenance status may be calculated by using knowledge of the position of the contact wire.

According to an embodiment of the present invention, the at least one emitter is configured to emit radio waves towards the contact wire, and the at least one detector is configured to detect radio waves reflected from the contact wire. The control unit is configured to calculate a contact wire distance and determine the maintenance status also based on the contact wire distance. The contact wire distance is one or more distance(s) between the at least one detector and the contact wire. It is to be understood that the at least one emitter may comprise one or more emitters for sending radio waves towards the at least one reflector and the contact wire. In another example, the at least one emitter may comprise a first emitter for sending radio waves towards the at least one reflector, and a second emitter for sending radio waves towards the contact wire. The present embodiment is advantageous in that it provides data of the contact wire's height over the train, which when combined with the data related to the movement of the pantograph, allows the control unit to more accurately and reliably determine a maintenance status of at least one of the pantograph and the contact wire.

According to an embodiment of the present invention, the control unit is further configured determine the maintenance status based on positional data. The positional data comprises information on the location of the vehicle. The positional data may be geographical data. The positional data may be received from a system or device external to the system of the present invention. The present information is advantageous in that the maintenance status may be determined more accurately. Furthermore, the present embodiment is advantageous in that it allows the system to correlate the maintenance status of e.g. the contact wire with a geographic position, and thus allows the location of. a damaged, deficient or soon to be damaged contact wire to be determined.

In a further embodiment, the control unit is configured to receive an acceleration of the vehicle and compare it with accelerations of the pantograph to determine the accelerations of the pantograph in relation to the contact wire. The control unit may be further configured to combine the positional data with detected acceleration of pantograph and/or the vehicle.

According to an embodiment of the present invention, the system further comprises a positioning unit configured to generate positional data. The positioning unit may comprise a GPS. The positional data may comprise geographical positions, such as a GPS location. The present embodiment is advantageous in that the system is more self-sufficient, and requires less, or no information, from an external source to be able to improve the accuracy of the determination of the maintenance status of the pantograph and/or the contact wire, and/or to correlate a maintenance status of the contact wire with a geographic position, such as a specific section of the railway.

According to an embodiment of the present invention, the system comprises a data storage unit configured to store positional data, and wherein the control unit is configured to receive the positional data from the data storage unit. Hence, positional data, e.g. of a known path that the vehicle is taking, may be stored on the data storage unit, and may be used to determine the maintenance status.

According to an embodiment of the present invention, the system comprises a wireless transmitter. The wireless transmitter may be a device configured to send and/or receive data and/or signals. The wireless transmitter may be a wireless transceiver. For example, the wireless transmitter may be connected to the detector, and wherein the wireless transmitter is configured to transfer detector data to the control unit wirelessly. In a further example, the wireless transmitter may be connected to a control unit and send a signal comprising an indication of the maintenance status of the pantograph and/or contact wire, e.g. to an external system, a related system on the same vehicle and/or a central computer monitoring the performance of the vehicle that may be arranged on the vehicle. The wireless transmitter may comprise a transceiver configured to receive signals with instructions related to control of the system. The control unit may comprise the wireless transmitter. The wireless transmitter may be communicatively connected to the detector and/or the control unit.

The wireless transmitter may transmit to any communication network, cloud service and/or device. For example, the wireless transmitter may transmit to telecommunications network. The present embodiment is advantageous in that the maintenance status may be communicated wirelessly, in an easier, efficient and more versatile manner. For example, the system may be a system physically and/or electrically separated from the rest of the vehicle's systems, and still be able to communicate the maintenance status to e.g. an operator of the vehicle, a cloud service/server and/or a communication network. The wireless transmitter may transmit at least part of the detector data and/or the maintenance status.

According to an embodiment of the present invention, the system comprises an emitter antenna configured to direct the radio waves in a predetermined direction. The antenna may be any device, component, module or element which can interact with the radio waves, in order to direct them in a desired direction, at least partially. The emitter may comprise the emitter antenna. The present embodiment is advantageous in that the radio waves may be more accurately directed, e.g. towards the reflector of the present invention. This may provide a more efficient system in terms of energy usage, because less energy may be spent on emitting radio waves and still provide sufficient radio waves to calculate the at least one distance and the at least one acceleration.

In a further embodiment, the emitter antenna comprises a lens unit. The lens unit may comprise one or more lenses. The lens unit may direct radio waves in a desired location, depending on its arrangement and the properties of the one or more lenses in the lens unit. This may further improve the efficiency and specificity of the emitter.

According to an embodiment, the pantograph comprises a carbon rail, and wherein the system comprises a first reflector and a second reflector, wherein the first reflector is arranged on a first end of the carbon rail and wherein the second reflector is arranged on a second end of the carbon rail, and wherein the first and second end are arranged on opposite sides of the carbon rail. This allows e.g. the tilt of the carbon rail to be determined by using detector data based on reflection from the first and second reflector. Furthermore, with at least two reflectors arranged on the carbon rail, one at each end of the panhead, a better indication of e.g. the sideways movement of the contact wire can be achieved. The present embodiment is advantageous in that the maintenance status of the pantograph and/or the contact wire may be more accurately determined.

According to an embodiment of the present invention, the system comprises a battery. The battery may be any component, device or unit configured to store electric power. The battery may comprise for example an electric battery and or a capacitator. The present embodiment is advantageous in that the system may be self-powered, at least in periods, and/or be electrically disconnected from the vehicle. Hence the system may be more electrically independent.

According to an embodiment of the present invention, the system further comprises an energy harvesting unit configured to generate an electric current from an electric field and/or magnetic field. The present embodiment is advantageous in that the system is partially or fully self-sufficient in terms of electrical power during operation. Furthermore, if the present embodiment is combined with a battery as described in the previous embodiment, there is provided a more self-sufficient and versatile system.

### BRIEF DESCRIPTION OF THE DRAWINGS

This and other aspects of the present invention will now be described in more detail, with reference to the appended drawings showing embodiment(s) of the invention.
Fig. 1 schematically illustrates a system in accordance with an embodiment of the present invention.
Fig. 2 schematically illustrates a system in accordance with an embodiment of the present invention.
Fig. 3 schematically shows a method in accordance with an embodiment of the present invention.
Fig. 4 schematically shows a method in accordance with an embodiment of the present invention.

### DETAILED DESCRIPTION

As illustrated in the figures, the sizes of the elements and regions may be exaggerated for illustrative purposes and, thus, are provided to illustrate the general structures of the embodiments. Like reference numerals refer to like elements throughout.

Exemplifying embodiments will now be described more fully hereinafter with reference to the accompanying drawings, in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

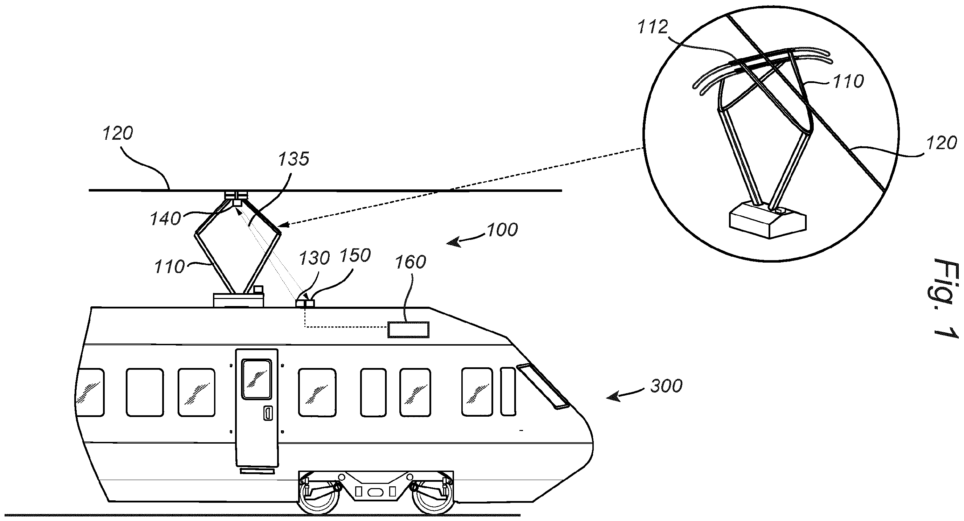

Fig. 1 schematically illustrates a system 100 in accordance with an embodiment of the present invention. The system 100 is arranged on a vehicle 300. Here, the vehicle is a train with a pantograph 110. The pantograph 110 is arranged on the roof/top of the vehicle 300. The pantograph 110 is adapted to collect a current from a contact wire 120 via carbon rails 112 to power the vehicle 300. The pantograph 110 may be any type of pantograph for powering a vehicle 300, for example, a half-pantograph (Z-pantograph), a diamond shaped pantograph or another type of pantograph. The carbon rails 112 may comprise graphite. As the pantograph 110 is in use, the pantograph 110 will be in touching contact with the contact wire 120. This causes the carbon rails 112 to be worn down by the friction between the carbon rails 112 and the contact wire 120. When the carbon rails 112 are worn down, uneven portions are created on the surface of the carbon rails 112, which may cause a higher friction in the interaction with the contact wire 120.

The contact between the pantograph and the wire will cause accelerations or movements in the pantograph 110. The movements, i.e. the distances and the accelerations, are monitored by the system 100.

The system 100 comprises at least one emitter 130 arranged on the vehicle 300. The at least one emitter 130 is configured to emit radio waves 135. The system 100 further comprises at least one reflector 140 arranged on the pantograph 110. The at least one reflector 140 is configured to reflect radio waves emitted by the emitter 130. The emitter 130 may be configured to at least partially aim the radio waves 135 towards the reflector 140. The system 100 further comprises at least one detector 150 arranged on the vehicle 300. The at least one detector 150 is configured to detect a portion of reflected radio waves 135, reflected from the at least one reflector 140, and generate detector data based on detected radio waves.

The system 100 further comprises a control unit 160 configured to receive the detector data and calculate at least one distance between the at least one reflector and the at least one detector, based on the detector data, and calculate at least one of a longitudinal, vertical and lateral acceleration of the pantograph 110 based on the detector data. The control unit 160 is further configured to determine the maintenance status based on at least one of the calculated distance and at least one of a calculated longitudinal, vertical and lateral acceleration. The maintenance status indicates a level of wear on at least one of the pantograph 110 and the contact wire 120. The control unit 160 may be configured to determine an acceleration pattern based on the calculated at least one acceleration of the pantograph 110, and the control unit 160 may be configured to determine the maintenance status based on the acceleration pattern. The control unit 160 may determine the maintenance status based on the calculated at least one acceleration and/or the acceleration pattern. The control unit 160 may calculate more than one of a longitudinal, vertical and lateral acceleration and/or more than one pattern of the longitudinal, vertical and lateral accelerations. For example, the control unit 160 may use the combined information of two or more calculated/determined accelerations to determine the maintenance status. In a further example, the control unit 160 may use the combined information of two or more calculated/determined acceleration patterns. An acceleration pattern may comprise information on the acceleration direction and/or acceleration value over time. In a further embodiment, the control unit 160 may use the combined information of at least one calculated distance and at least one calculated acceleration to determine the maintenance status.

The control unit 160 may be configured to calculate a first distance between the pantograph 110 and the at least one emitter 130, and wherein the control unit 160 is configured to determine the maintenance status based at least partially on the calculated first distance. From the received detector data, the control unit 160 may determine/calculate a distance between the at least one detector 150 and the at least one reflector 140. The control unit 160 may from the determined distance between the at least one detector 150 and the at least one reflector 140 determine at least one of a longitudinal, vertical and lateral acceleration.

The control unit 160 may be configured to determine the maintenance status based on positional data. This can be combined with acceleration information to provide a better determination of the maintenance status, and also allow the system to register where there may be damage/wear to with the contact wire 120.

The control unit 160 may be configured to determine the maintenance status also based on the speed of the vehicle 300, the positioning of the pantograph 110, and/or the position of the contact wire 120. The control unit 160 may combine data of any one of the distance between a reflector 140 and a detector 150, the acceleration(s) of the pantograph 110, the accelerated pattern(s), the position of the contact wire 120 and the speed of the vehicle 300. The control unit 160 may receive data of the speed of the vehicle from the vehicle 300, or from a sensor external to the system 100 and/or part of the system 100. The control unit 160 may receive data on the position of the contact wire 120 from a sensor external to the system 100 and/or part of the system 100.

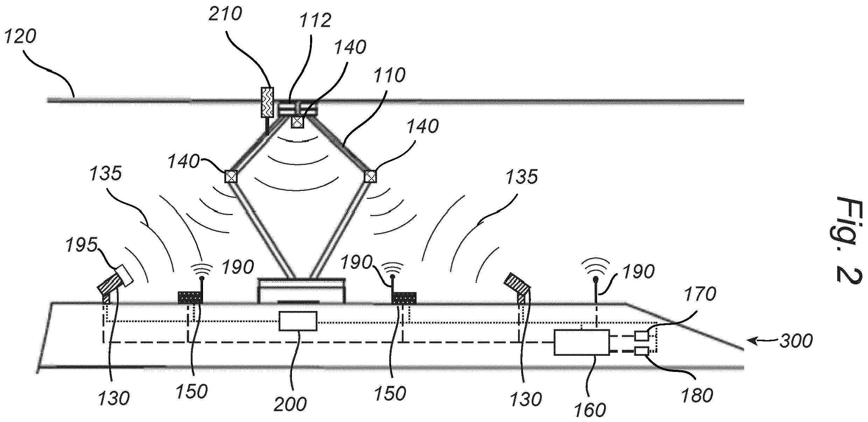

Fig. 2 schematically illustrates a system 100 in accordance with an embodiment of the present invention. It should be noted that the system 100 shown in Fig. 2 has several features in common with the system 100 shown in Fig. 1, and it is hereby referred to Fig. 1 and the associated text for an increased understanding of some of the features and/or functions of the system 100. In Fig. 2 the system 100 comprises a first and second emitter 130, wherein the first emitter 130 is arranged on the vehicle 300 on a first side of the pantograph 110, and wherein the second emitter 130 is arranged on the vehicle 300 on a second side of the pantograph 110, wherein the first and second side of the pantograph 110 are different sides. For example, the first and second emitter 130 may be arranged on opposite sides of the pantograph 110.

In Fig. 2, the system 100 comprises three reflectors 140 arranged on different locations on the pantograph 110. One of the at least one reflector 140 may be arranged on the bottom-side of the carbon rail 112 of the pantograph 110, i.e. on a side facing the roof of the vehicle 300.

In another example, not shown in Fig. 2, the system 100 comprises a first and second reflector 140, both arranged on the bottom-side of the carbon rail 112, wherein the first reflector 140 is arranged at a first part of the carbon rail 112, and a second reflector 140 is arranged at a part end of the carbon rail 112. The first and second reflector 140 may be arranged on opposites sides of the carbon rail 112 in the longitudinal direction of the carbon rail 112. In other words, the first reflector 140 may be arranged at a first end of the carbon rail 112 and the second reflector 140 may be arranged at a second end of the carbon rail 112, in the longitudinal direction of the carbon rail 112. The control unit 160 may more accurately determine the maintenance status of the pantograph and/or the contact wire based on a first detector data set generated from radar waves reflected from the first reflector 140, and a second detector data set generated from radar waves reflected from the second reflector 140. The control unit 160 may determine the tilt of the carbon rail 112 based on the first and second detector data sets. It is to be understood that the pantograph 110 may comprise a structure holding/carrying the carbon rail 112, e.g. a panhead structure, and wherein the at least one reflector 140 is arranged on said structure.

The system 100 comprises a first and second detector 150, wherein the first detector 150 is arranged on the vehicle 300 on a first side of the pantograph 110, and wherein the detector 150 is arranged on the vehicle 300 on a second side of the pantograph 110, wherein the first and second side of the pantograph 110 are different sides. For example, the first and second detector 150 may be arranged on opposite sides of the pantograph 110. The first emitter 130 and the first detector 150 may constitute one single radar unit. In other words, the system may comprise at least one radar unit, wherein the at least one radar unit comprises an emitter 130 and a detector 150.

In Fig. 2 the system 100 further comprises a positioning unit 170 configured to generate positional data. The positional data may comprise geographical data. The positional data may be determined by any satellite navigational systems known in the art such as for example GPS, GLONASS, Galileo or BeiDou-2GS. The determination of positional data a geographical positioning unit utilizing a global navigation satellite system adapted for any of the satellite systems known in the art, such as GPS, GLONASS, Galileo or BeiDou-2GS.

Additionally, the positional/geographical data may help distinguish whether or not the measured acceleration in the pantograph 110 and/or acceleration in the vehicle 300 is caused by a faulty, i.e worn down or damaged pantograph 110 or if the cause of the measured acceleration in the pantograph 110 and/or acceleration in the vehicle 300 is geographically related. In other words, the system 100, specifically the control unit 160, may be configured to compare the positional/geographical data, the measured/calculated distances and accelerations and/or acceleration in the vehicle 300 to previously to determine a maintenance status for the pantograph 110, the contact wire 120 and/or vehicle 300.

By analysing the measured/calculated distances and accelerations together with the positional data yet another factor is achieved indicating the cause of error since this will indicate if the error is bound to the geographical position or to the vehicle 300. Further, by combining this with the data for measured accelerations in the pantograph 110 and/or accelerations in the vehicle 300 as previously disclosed it will be possible to further differentiate the measured accelerations bound to geographical positions to be either induced from above the vehicle 300, such as for example induced from the contact wire 120, or from the surface on which the vehicle 300 is traveling, such as for example the track for a track bound vehicle or road for a non-track bound vehicle.

In other words, in the system 100 may also determine, and use the positional data to further determine, cause of measured acceleration. If there is reoccurring acceleration measurement registered by one or more vehicles 300 at the same positional position, a conclusion might be made that the cause of error is strongly related to the geographical position and not the vehicle(s) 300. The positional data may comprise geographical positions for e.g. a railway track on which the vehicle travels. The system 100, and more specifically the control unit 160, may be used to further distinguish if the measured movement, associated with the calculated at least one distance and the at least one acceleration, related to positional position, is induced by the contact wire 120, or parts thereof above the vehicle 300 or the road or track below the vehicle 300.

The system 100 further comprises a data storage unit 180 configured to store positional data, and wherein the control unit 160 is configured to receive the positional data from the data storage unit 180. The positional data and or data related to the at least one acceleration/pattern may be stored in order to make historical comparisons and track changes in measurements performed over time and by one or more vehicles 300.

The system 100 further comprises a wireless transmitter 190. The wireless transmitter 190 may be any wireless communication means. The detector 150 may send detector data to the control unit 160 wirelessly, via the wireless transmitter 190, and/or via a cord/cable. The wireless transmitter 190 may send an indication of the determined maintenance status, e.g. to a central monitor server configured to monitor the performance of the vehicle 300. The system 100 may comprise at least two wireless transmitters 190, that may be similar or different in design. For example, the system 100 may comprise a first wireless transmitter 190 connected to the detector 150, wherein the first wireless transmitter 190 is configured to send detector data to the control unit 160. In addition, the system 100 may comprise a second wireless transmitter 190 connected to the control unit 160, and wherein the second wireless transmitter 190 is configured to send an indication of the maintenance status and/or detector data to a user terminal, a computer, and/or central server arranged on the vehicle 300 and/or off the vehicle 300. The wireless transmitter 190 may send data over wireless communication, e.g. via a local communications network, such as Bluetooth or Wi-Fi.

The system 100 further comprises an emitter antenna 195 configured to direct the radio waves 135 in a predetermined direction. The emitter antenna 195 may improve how specific the emitted radio waves 135 are directed towards the reflector 140. The emitter antenna 195 may comprise a lens unit (not shown).

The system 100 may comprise a battery 200. The battery 200 may be electrically connected to at least one of the emitter 130, the detector 150 and the control unit 160. The battery 200 may be electrically connected to the emitter 130, the detector 150 and the control unit 160. The battery 200 may be configured to power all of the system 100. The battery 200 may also electrically connected to other parts of the system 100, e.g. the wireless transmitter 190, the positioning unit 170 and/or the storage unit 180, such that the system 100 may be fully powered by the battery 200.

The system 100 may further comprise an energy harvesting unit 210 configured to generate an electric current from an electric field and/or magnetic field. The energy harvesting unit 210 may be configured to harvest energy from an electric and/or magnetic field around the contact wire 120.

The energy harvesting unit 210 is configured to capture energy and the battery 200 may be configured to store the captured energy, such that the system 100 may use the stored captured energy.

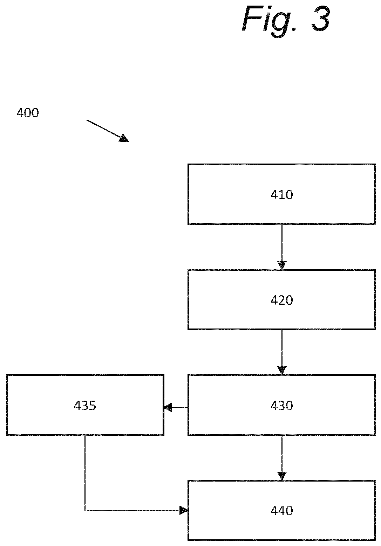

Fig. 3 schematically shows a method 400 for determining a maintenance status for at least one of a pantograph arranged on a vehicle, and a contact wire intended to be in electrical contact with the pantograph, in accordance with an embodiment of the present invention. The method 400 comprises emitting 410 radio waves towards the pantograph. There may be at least one reflector arranged on the pantograph, wherein the radio waves are emitted towards the at least one reflector. The radio waves may be emitted by an emitter configured to emit radio waves.

The method further comprises detecting 420 at least a portion of the radio waves reflected from the pantograph and generating detector data. The detecting 420 may be performed by a detector configured to detect radio waves and generate detector data.

The method further comprises calculating 430 at least one distance between the at least one reflector and the at least one detector based on the received detector data.

The method further comprises calculating 435 at least one of a longitudinal, vertical and lateral acceleration of the pantograph based on the detector data. The calculating 430/435 may be performed by a control unit configured to receive the generated detector data and calculate at least one distance between the at least one reflector and the at least one detector based on the detector data, and calculate at least one of a longitudinal, vertical and lateral acceleration of the pantograph based on the detector data.

The method further comprises determining 440 a maintenance status for at least one of the pantograph and the contact wire based on at least one of the calculated at least one distance and the at least one calculated acceleration, and wherein the maintenance status indicates a level of wear on at least one of the pantograph and the contact wire. The determining 440 may be performed by a control unit based on at least one of the calculated at least one distance and the calculated at least one acceleration, wherein the maintenance status indicates a level of wear on at least one of the pantograph and the contact wire. In an embodiment, the maintenance status is determined based on both the calculated at least one distance and at least one calculated acceleration.

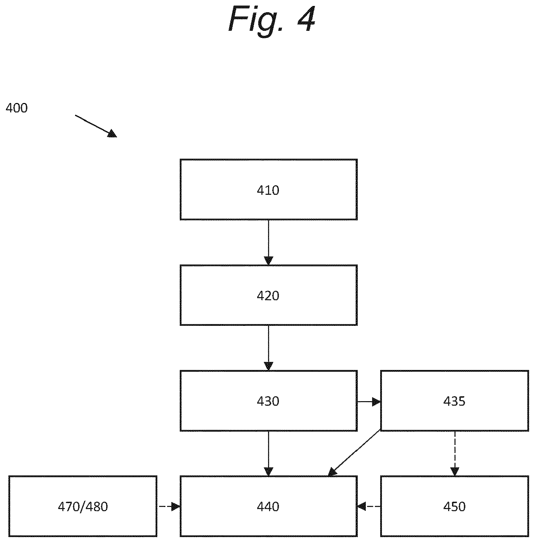

Fig. 4 schematically shows a method 400 in accordance with an embodiment of the present invention. It should be noted that the method 400 shown in Fig. 4 has several features in common with the method 400 discussed in Fig. 3, and it is hereby referred to Fig. 3 and the associated text for an increased understanding of some of the features and/or steps of the method 400. In the embodiment illustrated in Fig. 4, the method further comprises determining 450 an acceleration pattern based on the calculated at least one acceleration of the pantograph, and wherein the maintenance status may be determined based on the detected acceleration pattern. The method further comprises at least one of receiving 470 and generating 480 positional data, and wherein the maintenance status may be determined based at least partially on the positional data. The generating 480 of positional data may be performed by a positioning unit arranged on the vehicle.

The person skilled in the art realizes that the present invention by no means is limited to the preferred embodiments described above. On the contrary, many modifications and variations are possible within the scope of the appended claims. For example, one or more of the at least one emitter 130, the at least one reflector 140 and the at least one detector 150 may have different shapes, dimensions and/or sizes than those depicted/described. Furthermore, the arrangement of the different components of the system 100 may be different than those depicted/described.

## Claims

1. A system (100) for determining a maintenance status of at least one of a pantograph (110) arranged on a vehicle (300) and a contact wire (120) intended to be in electrical contact with the pantograph, the system comprising
at least one emitter (130) arranged on the vehicle, configured to emit radio waves (135),
at least one reflector (140) arranged on the pantograph, configured to reflect radio waves emitted by the emitter,
at least one detector (150) arranged on the vehicle, configured to detect at least a portion of the reflected radio waves, reflected from the at least one reflector and generate detector data, and
a control unit (160) configured to
receive the detector data,
calculate at least one distance between the at least one reflector and the at least one detector based on the received detector data,
calculate at least one of a longitudinal, vertical and lateral acceleration of the pantograph based on the calculated at least one distance, and
determine the maintenance status based on at least one of the calculated at least one distance and the calculated at least one acceleration, wherein the maintenance status indicates a level of wear on at least one of the pantograph and the contact wire.

2. The system according to claim 1, wherein the control unit is further configured to determine an acceleration pattern based on the calculated at least one acceleration of the pantograph, and wherein the control unit is configured to determine the maintenance status based on the acceleration pattern.

3. The system according to claim 1 or 2, wherein the at least one emitter is also configured to emit radio waves towards the contact wire, and the at least one detector is configured to detect radio waves reflected from the contact wire, and wherein the control unit is configured to calculate a contact wire distance and determine the maintenance status also based on the contact wire distance.

4. The system according to any one of the preceding claims, wherein the control unit is further configured determine the maintenance status based on positional data.

5. The system according to claim 4, wherein the system further comprises a positioning unit (170) configured to generate the positional data.

6. The system according to claim 4 or 5, wherein the system comprises a data storage unit (180) configured to store the positional data, and wherein the control unit is configured to receive the positional data from the data storage unit.

7. The system according to any one of the preceding claims, wherein the system comprises a wireless transceiver (190).

8. The system according to any one of the preceding claims, wherein the system comprises an emitter antenna (195) configured to direct the radio waves in a predetermined direction.

9. The system according to any one of the preceding claims, wherein the pantograph comprises a carbon rail (112), and wherein the system comprises a first reflector and a second reflector, wherein the first reflector is arranged on a first end of the carbon rail and wherein the second reflector is arranged on a second end of the carbon rail, and wherein the first and second end are arranged on opposite sides of the carbon rail.

10. The system according to any one of the preceding claims, wherein the system comprises a battery (200).

11. The system according to any one of the preceding claims, wherein the system further comprises an energy harvesting unit (210) configured to generate an electric current from an electric field and/or magnetic field.

12. A method (400) for determining a maintenance status for at least one of
a pantograph arranged on a vehicle, and a contact wire intended to be in electrical contact with the pantograph,
the method comprising the steps of:
emitting (410) radio waves towards the pantograph,
detecting (420) at least a portion of the radio waves reflected from the pantograph and generating detector data,
calculating (430) at least one distance between the at least one reflector and the at least one detector based on the received detector data,
calculating (435) at least one of a longitudinal, vertical and lateral acceleration of the pantograph based on the calculated at least one distance, and
determining (440) a maintenance status for at least one of the pantograph and the contact wire based on at least one of the calculated at least one distance and the at least one calculated acceleration, and wherein the maintenance status indicates a level of wear on at least one of the pantograph and the contact wire.

13. The method according to claim 12, further comprising determining (450) an acceleration pattern based on the calculated at least one acceleration of the pantograph, and wherein the maintenance status is determined based on the detected acceleration pattern.

14. The method according to claim 12 or 13, wherein the maintenance status is determined based at least partially on the calculated distance and at least one calculated acceleration.

15. The method according to any one of claims 12 to 14, wherein the method further comprises at least one of receiving (470) and generating (480) positional data, and wherein the maintenance status is determined based at least partially on the positional data.
